(19) Europäisches Patentamt
European Patent Office
Office européen des brevets

(11) **EP 1 854 717 B1**

(12) **EUROPÄISCHE PATENTSCHRIFT**

(45) Veröffentlichungstag und Bekanntmachung des Hinweises auf die Patenterteilung:
**22.04.2009   Patentblatt 2009/17**

(51) Int Cl.:
**B64C 13/16** (2006.01)   **G05D 1/02** (2006.01)
**G05D 1/08** (2006.01)

(21) Anmeldenummer: **06009414.1**

(22) Anmeldetag: **08.05.2006**

(54) **Verfahren zur Reduzierung der Turbulenz- und Böeneinflüsse auf das Flugverhalten von Luftfahrzeugen und Steuerungseinrichtung hierfür**

Apparatus and method for reducing the impact of turbulence and gusts on aircraft

Dispositif et procédé pour réduire les effets des turbulences et des rafales sur un aéronef

(84) Benannte Vertragsstaaten:
**FR GB IT**

(43) Veröffentlichungstag der Anmeldung:
**14.11.2007   Patentblatt 2007/46**

(73) Patentinhaber: **DLR Deutsches Zentrum für Luft- und Raumfahrt e.V.**
**51147 Köln (DE)**

(72) Erfinder: **Hahn, Klaus-Uwe**
**38176 Wendeburg (DE)**

(74) Vertreter: **Gerstein, Hans Joachim et al**
**Gramm, Lins & Partner GbR**
**Freundallee 13**
**30173 Hannover (DE)**

(56) Entgegenhaltungen:
**GB-A- 1 379 026         US-A- 2 621 873**
**US-A- 2 962 243         US-A- 5 797 105**
**US-B1- 6 273 370**

**Beschreibung**

Die Erfindung betrifft ein Verfahren zur Reduzierung der Turbulenz- und Böeneinflüsse auf das Flugverhalten von Luftfahrzeugen sowie eine Steuerungseinrichtung hierfür.

Das Flugverhalten von Luftfahrzeugen, insbesondere von Flugzeugen, wird durch Turbulenzen und Böen der das Luftfahrzeug umgebenden Luftmassen ungünstig beeinflusst. Insbesondere ein hoher Auftriebsanstieg, geringe Flächenbelastungen sowie hohe Fluggeschwindigkeiten und niedrige Flughöhen haben negative Auswirkungen auf das Turbulenz- und Böenverhalten von Flugzeugen. Die Folgen daraus sind eine Verschlechterung des Passagierkomforts sowie eine Erhöhung der Strukturbelastungen. Aber auch in großen Höhen können heftige Turbulenzen ("Clear Air Turbulence" CAT) auftreten, die erhebliche Strukturbelastungen erzeugen und sogar zur Gefährdung der Fluginsassen führen können.

In O'Connel, R.F.: "Design, Development and Implementation of an Active Control System for Load Alleviation for a Commercial Airplane", in: AGARD Report No. 683,1979 und in Rollwagen, G.; Ellgoth, H.; Beuck, G.: "Identification of Dynamic Response, Simulation and Design of a Highly Nonlinear Digital Load Alleviation System for a Modern Transport Aircraft", in: 17tH ICAS Congress, Stockholm, Schweden, 1990 ist ein System zur Abminderung von Böenlasten und zur Dämpfung von Strukturschwingungen beschrieben, dass auf dem Prinzip der Signalrückführung (Feedback, Close-Loop-System) beruht. Diese Regelung reagiert allerdings erst nach dem sich das Flugverhalten aufgrund von Turbulenzen und/oder Böen bemerkbar bereits geändert hat.

Aus Böhret, H.; Krag, B.; Skudridakis, J.: "OLGA - An Open Loop Gust Alleviation System", in: AGARD CP Nr. 384, Toronto, Kanada, 1985 ist ein Steuerungsverfahren nach dem Prinzip der Störgrößenaufschaftung zur Abminderung von Böenlasten und Verbesserung des Passagierkomforts bekannt. Dabei werden die Flugeigenschaften nicht verändert und es wird bereits auf die ursächliche Störung reagiert und diese kompensiert, bevor die Störung durch Turbulenzen oder Böen auf das Flugzeug selbst wirkt.

Vergleichbare Steuerungsverfahren sind auch in Hahn, K.-U.; König, R.: "LARS - Auslegung eines fortschrittlichen Böenabminderungssystems mit ATTAS", in: Deutscher Luft- und Raumfahrtkongress, Berlin, Germany, 1991 sowie Hahn, K.-U.; König, R.: "ATTAS Flight Test and Simulation Results of the Advanced Gust Management System LARS", in: AIAA Atmospheric Flight Mechanics Conference, Hilton Head Island, S.C., USA, 1992 beschrieben.

Bei dem Prinzip der Signalrückführung (Closed Loop) wird die Reaktion des Luftfahrzeugs auf die Böen gemessen und zu den Steuerungsflächen der Tragfläche zurückgeführt, um diese Reaktion zu reduzieren. Dabei ist keine aufwendige Berechnung des Böenwinkels erforderlich. Jedoch werden auch Beschleunigungen aufgrund von Flugmanövem über die Regelung zurückgeführt und können den Kommandos des Piloten entgegenwirken.

Bei den Steuerungsverfahren (Open Loop) ist die genaue Kenntnis des Angriffswinkels einer Böe erforderlich. Diese muss aus Sensorsignalen bestimmt werden. In Abhängigkeit von den Böenangriffswinkeln werden die Steuerungsflächen der Tragflächen und des Höhenleitwerks so eingestellt, dass durch die Böen verursachte zusätzliche Auftriebskräfte und Nickmomente kompensiert werden. Die Handhabungseigenschaften des Flugzeugs bleiben dabei unverändert. Jedoch hängt der Wirkungsgrad des Steuerungssystems stark von der Genauigkeit der Berechnung des Böenangriffswinkels und dem Ablenkgrad der Steuerungsflächen ab.

Aus König, R., Hahn, K.-U.:"Load Alleviation and Ride Smoothing Investigations using ATTAS", in: 17tH ICAS Congress, Stockholm, Schweden, 1990 ist das Steuerungsverfahren nach dem Prinzp der Störgrößenaufschaltung beschrieben, bei dem der sogenannte Windanstellwinkel aus Luft- und Innertialdaten berechnet wird. Der Windanstellwinkel ist der auftriebsverändernde Zusatzanstellwinkel, der in Folge atmosphärischer Turbulenzen und Böen entsteht. Es wird ausschließlich die Flugzeuglängsbewegung berücksichtigt, um eine aufwendige Böenvektorbestimmung zu vermeiden. Der Windanstellwinkel $\alpha_w$ wird nach folgender Formel berechnet:

$$\alpha_w = \alpha_L - \theta + \frac{\dot{H}}{V} + \frac{q \cdot r_s}{V}$$

bestimmt. Dabei ist $\alpha_L$ der durch einen Anstellwinkelsensor (z. B. Flugzeug) gemessene Anstellwinkel, $\theta$ der Längsla-gewinkel, auch Nickwinkel genannt, $\overset{\circ}{H}$ die aktuelle Vertikalgeschwindigkeit des Flugzeugs, V die Fluggeschwindigkeit des Flugzeugs gegenüber der Luft, q die Nickgeschwindigkeit des Flugzeugs und $r_s$ der Abstand des Windangriffssensors vom Schwerpunkt des Flugzeugs.

Die genannten Größen sind in der DIN 9300 "Luft- und Raumfahrt; Begriffe, Größen und Formelzeichen der Flugmechanik" eindeutig definiert.

Der Nickwinkel ist hierbei der Winkel der Flugzeuglängsachse im flugzeugfesten Koordinatensystem und der

Knotenachse $k_1$ als Projektion der flugzeugfesten Flugzeuglängsachse $x_f$ auf die geodätische Horizontalebene, d. h, die $x_g$-$y_g$-Ebene. Die Nickgeschwindigkeit q ist die Drehgeschwindigkeit des Flugzeugs um die Flugzeugquerachse $y_f$.

Das beschriebene Steuerungsverfahren ist aufgrund der vereinfachten Betrachtung lediglich der Fahrzeuglängsbewegung nicht zur ausreichenden Turbulenz- und Böenkompensation im Kurvenflug geeignet, insbesondere wenn dabei noch Schiebewinkel zwischen der Querachse und der Querkraftachse des Flugzeugs auftreten.

US 5,797,105 A offenbart eine Steuerungseinheit für ein Flugzeug mit einem dreidimensionalen Detektionssystem für die wahre Luftgeschwindigkeit. Mit Hilfe eines Steuerungscomputers wird die Geschwindigkeit, die Höhe, der Versatz, die Beschleunigung und die Winkelbeschleunigung reguliert. Hierzu werden u.a. der Luftangriffswinkel und der Luftseitenversatzwinkel geregelt. Die Regelung erfolgt u.a. anhand der Flugzeugbewegungen, die mit Geschwindigkeits-, Beschleunigungs-, Höhen-, Winkelbeschleunigungs- und Triebwerksansteuerungsinformationen bestimmt werden.

Aufgabe der Erfindung ist es daher, ein verbessertes Verfahren zur Reduzierung der Turbulenz- und Böeneinflüsse auf das Flugverhalten von Luftfahrzeugen sowie eine entsprechende Steuereinrichtung zu schaffen, um ohne aufwendige Böenvektorbestimmung dennoch ein ausreichend genaues Zusatzanstellwinkel-Ansteuersignal unabhängig von der Flugbewegung des Luftfahrzeugs, d. h. auch im Kurvenflug, zu ermitteln.

Die Aufgabe wird mit dem Verfahren und der Steuerungseinrichtung der eingangs genannten Art erfindungsgemäß dadurch gelöst, dass das Zusatzanstellwinkel-Ansteuersignal für Stellflächen an luftkrafterzeugenden Flächen des zu steuernden Luftfahrzeugs, insbesondere Tragflügel und/oder Höhenleitwerk des Luftfahrzeugs, in Abhängigkeit von einem aktuellen Hängewinkel und Schiebewinkel des zu steuernden Luftfahrzeugs bestimmt und das Zusatzanstellwinkel-Ansteuersignal auf Stellsignale zur Steuerung der Stellflächen des steuernden Luftfahrzeugs aufgeschaltet wird.

Die Hängewinkel und Schiebewinkel lassen sich in bekannter Weise leicht mit Sensoren bestimmen oder können aus in einem Flugzeug vorhandenen Messdaten der Lage, Position und Geschwindigkeit des Flugzeugs bestimmt werden.

Die eingangs erwähnte Formel zu Berechnung des Windanstellwinkels wird derart modifiziert, dass die Komponente $\alpha_{wf}$ des durch eine vertikale Luftmassenbewegung hervorgerufenen Windanstellwinkels in der Symmetrieebene des Luftfahrzeugs nach der Formel:

$$\alpha_{wf} = \cos(\phi)\left[ f\left( \frac{\dot{H}}{V} \right) - \theta + \cos(\phi)\left( \alpha + \frac{q \cdot r_{AoA}}{V} \right) + \sin(\phi)\left( \beta - \frac{r \cdot r_{AoS}}{V} \right) \right]$$

bestimmt wird. Dabei sind $\phi$ der Hängewinkel, $\dot{H}$ die Vertikalgeschwindigkeit des Luftfahrzeugs, V die Fluggeschwindigkeit des Luftfahrzeugs gegenüber der umgebenden Luft, $\theta$ der Längslagenwinkel des Luftfahrzeugs, $\alpha$ der Anstellwinkel der Tragflächen des Luftfahrzeugs, q die Nickgeschwindigkeit des Luftfahrzeugs, $r_{AoA}$ der Abstand des Anstellwinkelsensors vom Schwerpunkt des Luftfahrzeugs, r die Giergeschwindigkeit und $r_{AoS}$ der Abstand des Schiebewinkelsonsors vom Schwerpunkt ist. Mit $f\left( \dfrac{\dot{H}}{V} \right)$ ist eine Funktion des Verhältnisses der Vertikalgeschwindigkeit zur

Fluggeschwindigkeit bezeichnet. Der Hängewinkel $\phi$ wird zur korrekten Transformation in das flugzeugfeste Koordinatensystem und der Schiebewinkel $\beta$ als zusätzliche Einflüsse genutzt.

Die genannten Variabeln sind in der DIN 9300 eindeutig definiert, auf die Bezug genommen wird.

Besonders vorteilhaft ist, wenn die Bestimmung des Ansteuersignals mit der Funktion $f\left( \dfrac{\dot{H}}{V} \right)$ gleich $\dfrac{\dot{H}}{V}$ für kleine Bahnwinkel oder $\arcsin\left( \dfrac{\dot{H}}{V} \right)$ für größere Bahnwinkel ausgebildet ist.

Die Erfindung wird nachfolgend anhand der beigefügten Zeichnungen beispielhaft näher erläutert. Es zeigen:

3

Figur 1 -   Blockdiagramm einer Einrichtung zur Ermittlung des Windanstellwinkels;

Figur 2 -   Blockdiagramm einer Open-Loop Steuerung von Stellflächen am Tragflügel und am Höhenleitwerk in Abhängigkeit von dem Windanstellwinkel;

Figur 3 -   Definition von Achsen und Winkeln im geodätischen (g) und flugzeugfesten (f) Koordinatensystem gemäß DIN 9300;

Figur 4 -   Definition von Achsen und Winkeln im flugzeugfesten (f), aerodynamischen (a) und experimentellen (e) Koordinatensystem gemäß DIN 9300.

Figur 5 -   Querschnittsansicht einer Tragfläche zur Darstellung der Änderung des Luftkraftvektors in Folge einer Aufwindböe.

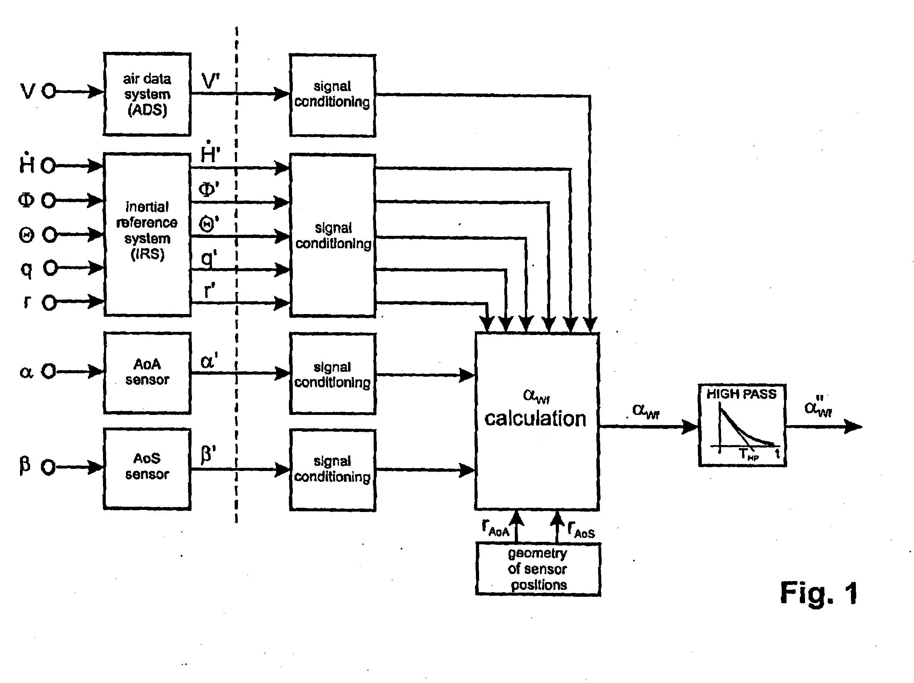

Die Figur 1 lässt ein Blockdiagramm einer Steuerungseinrichtung zur Ermittlung des Windansteilwinkels $\alpha_{Wf}$ im fahrzeugfesten Koordinatensystem erkennen, der nach Hochpassfilterung in ein Ansteuersignal $\boldsymbol{\alpha_{Wf}^{II}}$ für eine Open-Loop-Steuerung nach dem Prinzip der Störgrößenaufschaltung genutzt wird.

Mit einem Luftdatensystem (Air-Data-System) wird Geschwindigkeit V des Flugzeugs gegenüber der Luft ermittelt. Die geodätische Vertikalgeschwindig $\dot{H}$ des Flugzeugs wird entweder aus dem Luftdatensystem (Air-Data-System) als barometrische Höhenänderung $\dot{H}_{baro}$, aus der inertialen Referenzsystem (IRS) als $\dot{H}_{inertial}$ oder mit Hilfe einer komplementären Filterung aus dem barometrischen Höhensignal $H_{baro}$ und der intertialen VertikalbesChleunigung $\ddot{H}_{inertial}$ bestimmt. Weiterhin werden mit der intertialen Referenzsystem (IRS) der Hängewinkel $\phi$, der Längslagewinkel $\theta$, die Nickgeschwindigkeit q und die Giergeschwindigkeit r erfasst. Der Anstellwinkel $\alpha$ wird durch einen Anstellwinkelsensor erfasst. Der Schiebewinkel $\beta$ wird durch einen Schiebewinkelsensor erfasst. Alle Sensorsignale werden mindestens so aufbereitet (Signal Conditioning), dass sie kalibriert und synchronisiert werden.

Die durch eine vertikale Luftmassenbewegung hervorgerufenen Komponente $\alpha_{Wf}$ des Windanstellwinkels in der Flugzeugsymmetrieebene wird im flugzeugfesten Koordinatensystem nach der Formel:

$$\alpha_{Wf} = \cos(\phi)\left[ f\left(\frac{\dot{H}}{V}\right) - \theta + \cos(\phi)\left(\alpha + \frac{q \cdot r_{AoA}}{V}\right) + \sin(\phi)\left(\beta - \frac{r \cdot r_{AoS}}{V}\right)\right] \quad 20$$

bestimmt. Durch die Faktoren $\cos(\phi)$ und $\sin(\phi)$ sowie den Schiebewinkel $\beta$ wird der Windanstellwinkel $\alpha_{Wf}$ in der Flugzeugsymmetrieebene infolge einer vertikalen Luftmassenbewegung korrekt bestimmt, auch wenn sich die Randbedingungen beispielsweise im Kurvenflug ändern. Die in der Flugzeugsymmetrieebene wirksame Komponente des Vertikalwindes erzeugt den Windanstellwinkel $\alpha_{Wf}$, der einen Zusatzanstellwinkel an der Tragfläche und dadurch eine Auftriebsänderung bewirkt. Es ist vorteilhaft, den berechneten Windanstellwinkel $\alpha_{Wf}$ über einen Hochpass zu filtern.

Bei dem so erzeugten gefilterten Windanstellwinkel $\boldsymbol{\alpha_{Wf}^{II}}$ werden eventuell vorhandene konstante Sensorfehler, langsame Sensordriften und sehr niederfrequente (für Böenlasten nicht relevante) Luftmassenbewegungen herausgefiltert. Die wirksame Komponente $\alpha_{Wf}$ kann zum Beispiel mit Hilfe von Stellflächen zur direkten Auftriebskontrolle kompensiert werden.

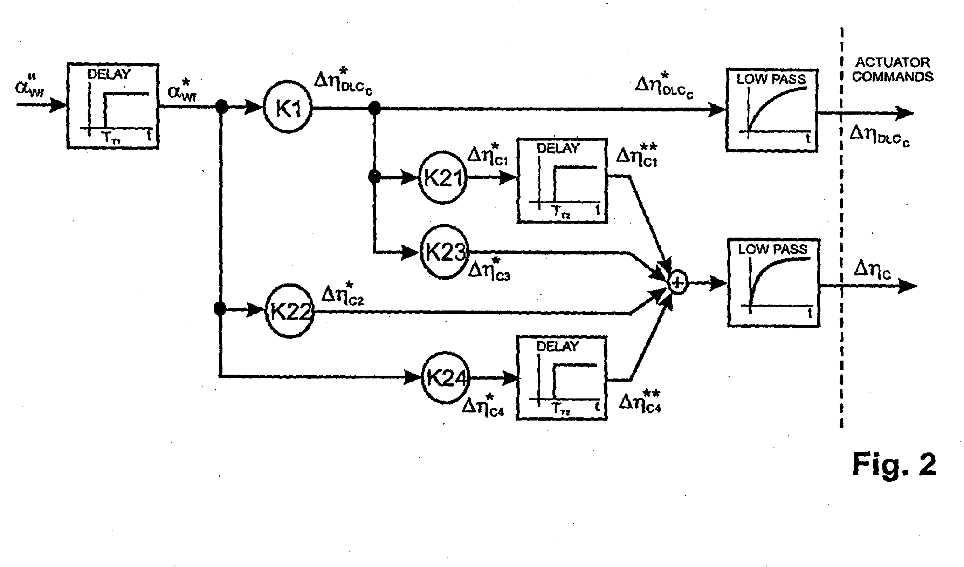

Die Figur 2 lässt ein Blockdiagramm eines Open-Loop-Steuerungssystems erkennen, bei dem die Komponente $\alpha_{Wf}$ des Windanstellwinkels in der Flugzeugsymmetrieebene als Störgröße zur Steuerung der Stellflächen an den Tragflügeln und am Höhenleitwerk (i. A. Höhenruder) auf die Stellsignale aufgeschaltet wird. Die Stellflächen an den Tragflügeln dienen zur direkten Auftriebssteuerung (Direkt Lift Control).

Die Verzögerungszeit $T_{T1}$ berücksichtigt die Laufzeit der Böenstörung vom Ort der Anstellwinkel- bzw. Schiebewinkelmessung bis zu auftriebserzeugenden Tragfläche. Der mit der Verzögerungszeit (Delay) $T_{T1}$ verzögerte Windanstellwinkel $\boldsymbol{\alpha_{Wf}^{II}}$ wird mit dem Verstärkungsfaktor K1 multipliziert und nach Tiefpassfilterung (Low Pass) als Differenzstellgröße zur Steuerung der Stellflächen an den Tragflügeln genutzt.

Zur Steuerung des Nickmomentenhaushaltes werden unterschiedliche und teilweise mit $T_{T1}$ oder $(T_{T1}+T_{T2})$ verzögerte Differenzsteuersignale den Stellflächen des Höhenleitwerkes zugeführt.

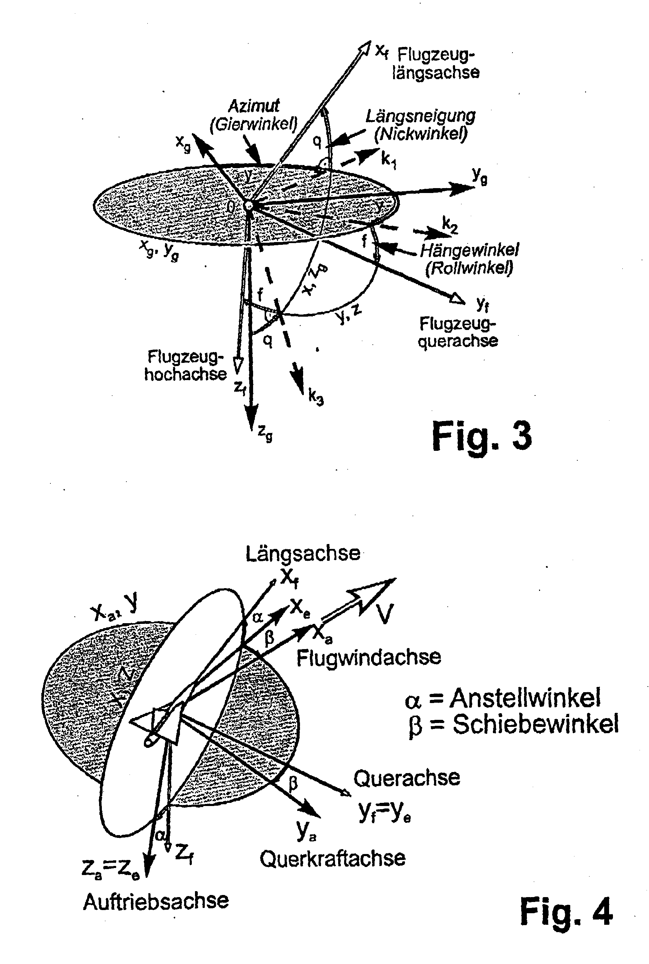

Die zur Bestimmung des Windanstellwinkels $\alpha_{Wf}$ genutzten Messgrößen werden nachfolgend anhand der Figuren 3 und 4 weiter erläutert, wobei auch Bezug auf die DIN 9300 genommen wird.

Die Figur 3 lässt das flugzeugfeste Koordinatensystem mit dem Index "f" erkennen. Das flugzeugfeste Koordinatensystem wird durch die Flugzeuglängsachse $x_f$, die Flugzeugquerachse $y_f$ und die Flugzeughochachse $z_f$ aufgespannt. Weiterhin ist eine erste Knotenachse $k_1$ als Projektion der Flugzeuglängsachse $X_f$ auf die geodätische Horizontalebene $x_g$, $y_g$ definiert. Die Längsneigung bzw. der Nickwinkel ist der Winkel zwischen der Flugzeuglängsachse $x_f$ im flugzeugfesten Koordinatensystem und der ersten Knotenachse $k_1$. Der Nickwinkel steht senkrecht auf der Horizontalebene $x_g$, $y_g$ zwischen der Knotenachse $k_1$ und der Längsachse $x_f$ im flugzeugfesten Koordinatensystem.

Der Hängewinkel oder Rollwinkel $\phi$ ist definiert zwischen einer zweiten Knotenachse $k_2$ und der Flugzeugquerachse $y_f$ im flugzeugfesten Koordinatensystem. Die zweite Knotenachse $k_2$ liegt in der geodätischen Horizontalebene $x_g$, $y_g$ und steht senkrecht auf der ersten Knotenachse $k_1$. Der Gierwinkel, der Nickwinkel und der Rollwinkel $\phi$ werden zusammen als Eulerwinkel bezeichnet. Diese Eulerwinkel stehen nicht senkrecht aufeinander, so dass die Reihenfolge der Einzeldrehungen bei der Transformation vom flugzeugfesten Koordinatensystem in ein aerodynamisches Koordinatensystem und umgekehrt wichtig ist.

Die Figur 4 lässt das aerodynamische Koordinatensystem $x_a$, $y_a$, $z_a$ mit dem Index "a" erkennen. Weiterhin ist ein flugzeugfestes Koordinatensystem $x_f$, $y_f$ und $z_f$ dargestellt. Die Figur 4 zeigt außerdem das experimentelle Koordinatensystem (Index "e"). Die Querachse des Flugzeugs $y_f$ und die $y_e$-Achse des experimentellen Koordinatensystem fallen zusammen: $y_f=y_e$ Die $z_a$-Achse des aerodynamischen Koordinatensystems und die $z_e$-Achse des experimentellen Koordinatensystems fallen zusammen: $z_a=z_e$.

Die Z-Achse im aerodynamischen Koordinatensystem bildet die Auftriebsachse $z_a=z_e$.
Die y-Achse im aerodynamischen Koordinatensystem bildet die Querkraftachse $y_a$.

Der Schiebewinkel $\beta$ ist der erforderliche Drehwinkel um die $z_a=z_e$-Achse um die $x_e$-Achse in die $x_e$-Achse in die $x_a$-Achse zu überführen.

Der Anstellwinkel $\alpha$ ist der erforderliche Drehwinkel, um die $y_f=y_e$-Achse um die $x_e$-Achse in die $x_f$-Achse zu überführen.

Mit V ist der Fluggeschwindigkeitsvektor gegenüber der Luft bezeichnet, der als Pfeil skizziert ist.

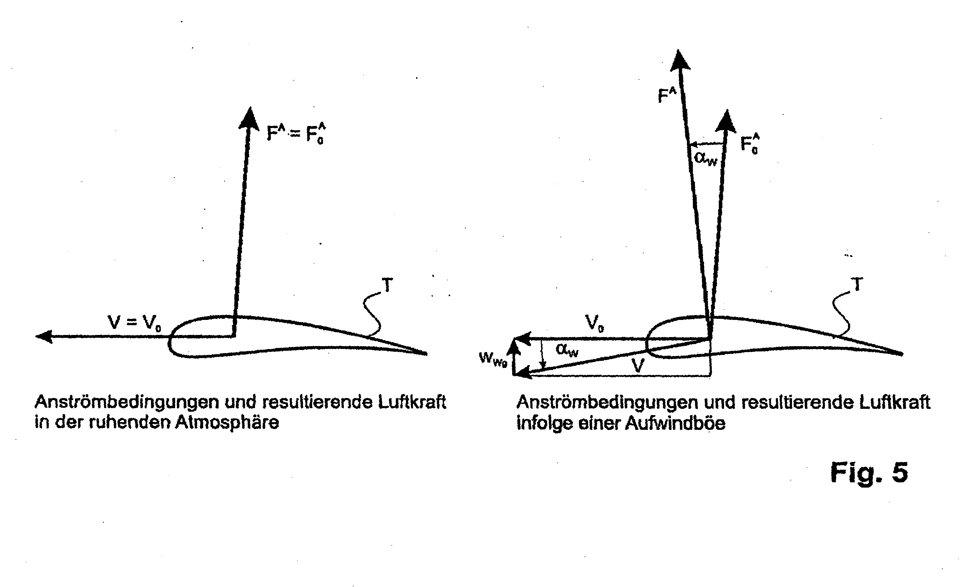

Die Figur 5 zeigt eine Querschnittsansicht einer angeströmten Tragfläche T. Das linke Bild zeigt die Verhältnisse beim stationären Flug in der ruhenden Atmosphäre. Die Fluggeschwindigkeit $V=V_0$ des Flugzeuges (V=Anströmungsgeschwindigkeit der Tragfläche T) erzeugt eine Luftkraft $F^A=F_0^A$. Wirkt nun eine Aufwindböe auf den Tragflügel, verändert diese die Fluggeschwindigkeit V in Betrag und Richtung. Der Betrag der Fluggeschwindigkeit wird geringfügig größer ($V>V_0$) und die Tragfläche T wird aus einer steileren Richtung angeströmt. Gegenüber der ursprünglichen Anströmrichtung der Tragfläche T erzeug die Aufwindböe den Windanstellwinkel (=Zusatzanstellwinkel) $\alpha_W$. Beide Effekte führen zu einer Vergrößerung der resultierenden Luftkraft $F^A=F_0^A$ Wegen $\alpha_W$ wird auch die Richtung der resultierenden Luftkraft $F^A$ geringfügig verändert. Es überwiegt jedoch die Änderung des Betrages der resultierenden Luftkraft $F^A$.

**Patentansprüche**

1. Steuerungseinrichtung für Luftfahrzeuge zur Reduzierung der Turbulenz- und Böeneinflüsse auf das Flugverhalten, wobei die Steuerungseinrichtung mit einem Schiebewinkelsensor zur Bestimmung des aktuellen Schiebwinkels ($\beta$) mit einem Hängewinkelsensor zur Bestimmung des aktuellen Hängewinkels ($\Phi$) verbunden ist, **dadurch gekennzeichnet, dass** die Steuerungseinrichtung zur Generierung eines Zusatzanstellwinkel-Ansteuersignals für Stellflächen an luftkrafterzeugenden Flächen des zu steuernden Luftfahrzeugs, insbesondere Tragflügel und/oder Höhenleitwerk, in Abhängigkeit von einem aktuellen Hängewinkel ($\Phi$) und Schiebewinkel ($\beta$) des zu steuernden Luftfahrzeugs und zum Aufschalten des Zusatzanstellwinkel-Ansteuersignals auf Stellsignale zur Steuerung der Stellflächen des zu steuernden Luftfahrzeugs eingerichtet ist, indem die Steuerungseinrichtung das Zusatzanstellwinkel-Ansteuersignal in Abhängigkeit von einer Komponente ($\alpha_{wf}$) des durch eine vertikale Luftmassenbewegung hervorgerufenen Windanstellwinkels in der Symmetrieebene des Luftfahrzeugs nach der Formel:

$$\alpha_{wf} = \cos(\phi)\left[ f\left(\frac{\dot{H}}{V}\right) - \theta + \cos(\phi)\left(\alpha + \frac{q \cdot r_{AoA}}{V}\right) + \sin(\phi)\left(\beta - \frac{r \cdot r_{AoS}}{V}\right)\right]$$

bestimmt, wobei $\Phi$ der Hängewinkel, $\dot{H}$ die Vertikalgeschwindigkeit des Luftfahrzeugs, V die Fluggeschwindigkeit des Luftfahrzeugs gegenüber der umgebenden Luft, $\theta$ der Längslagenwinkel des Luftfahrzeugs, $\alpha$ der Anstellwinkel der Tragflächen des Luftfahrzeugs, q die Nickgeschwindigkeit des Luftfahrzeugs, $r_{AoA}$ der Abstand des Anstellwinkelsensors vom Schwerpunkt des Luftfahrzeugs, r die Giergeschwindigkeit und $r_{AoS}$ der Abstand des Schiebewinkelsensors vom Schwerpunkt ist und wobei $f\left(\dfrac{\dot{H}}{V}\right)$ eine Funktion des Verhältnisses der Vertikalgeschwindigkeit $\dot{H}$ zur Fluggeschwindigkeit V ist.

2. Steuerungseinrichtung nach Anspruch 1, **dadurch gekennzeichnet, dass** die Steuerungseinrichtung zur Bestimmung des Zusatzanstellwinkel-Ansteuersignals mit der Funktion

$$f\left(\frac{\dot{H}}{V}\right) \text{ gleich } \frac{\dot{H}}{V} \text{ oder arcsin}\left(\frac{\dot{H}}{V}\right)$$

ausgebildet ist.

3. Verfahren zur Reduzierung der Turbulenz- und Böeneinflüsse auf das Flugverhalten von Luftfahrzeugen, **gekennzeichnet durch** Ermittlung eines Zusatzanstellwinkels ($\alpha_{wf}$) als Komponente $\alpha_{Wf}$ des **durch** eine vertikale Luftmassenbewegung hervorgerufenen Windanstellwinkels in der Symmetrieebene des Luftfahrzeugs nach der Formel:

$$\alpha_{wf} = \cos(\phi)\left[ f\left(\frac{\dot{H}}{V}\right) - \theta + \cos(\phi)\left(\alpha + \frac{q \cdot r_{AoA}}{V}\right) + \sin(\phi)\left(\beta - \frac{r \cdot r_{AoS}}{V}\right)\right]$$

wobei $\Phi$ der Hängewinkel, $\dot{H}$ die Vertikalgeschwindigkeit des Luftfahrzeugs, V die Fluggeschwindigkeit des Luftfahrzeugs gegenüber der umgebenden Luft, $\theta$ der Längslagenwinkel des Luftfahrzeugs, $\alpha$ der Anstellwinkel der Tragflächen des Luftfahrzeugs, q die Nickgeschwindigkeit des Luftfahrzeugs, $r_{AoA}$ der Abstand des Anstellwinkelsensors vom Schwerpunkt des Luftfahrzeugs, r die Giergeschwindigkeit und $r_{Aos}$ der Abstand des Schiebewinkelsensors vom Schwerpunkt ist und wobei $f\left(\dfrac{\dot{H}}{V}\right)$ eine Funktion des Verhältnisses der Vertikalgeschwindigkeit $\dot{H}$ zur Fluggeschwindigkeit V ist, zur Berechnung eines Stellsignals für Stellflächen an luftkrafterzeugenden Flächen des Luftfahrzeugs in Abhängigkeit von einem aktuellen Hängewinkel ($\Phi$) und Schie-

bewinkel (β) und Steuern der Stellflächen in Abhängigkeit von dem Zusatzanstellwinkel ($\alpha_{wf}$).

4.   Verfahren nach Anspruch 3, **dadurch gekennzeichnet, dass** die Funktion

$$f\left(\frac{\dot{H}}{V}\right) \text{ gleich } \frac{\dot{H}}{V} \text{ oder arcsin } \left(\frac{\dot{H}}{V}\right)$$

ist.

## Claims

1.   Control device for aircraft for reducing the turbulence and gust influences on the flying characteristics, wherein the control device is connected to a sideslip angle sensor in order to determine the instantaneous sideslip angle (β) and to a bank angle sensor in order to determine the instantaneous bank angle (Φ), **characterised in that** the control device is designed to generate an additional incidence angle drive signal for control surfaces on surfaces of the controlled aircraft which generate an air force, in particular wing and/or tailplane, as a function of an instantaneous bank angle (Φ) and sideslip angle (β) of the controlled aircraft and for applying the additional incidence angle drive signal to control signals for controlling the control surfaces of the controlled aircraft, wherein the control device determines the additional incidence angle drive signal as a function of a component ($\alpha_{wf}$) of the wind incidence angle, caused by a vertical air mass movement, on the plane of symmetry of the aircraft, using the formula:

$$\alpha_{wf} = \cos(\Phi)\left[f\left(\frac{\dot{H}}{V}\right) - \Theta + \cos(\phi)\left(\alpha + \frac{q \cdot r_{AoA}}{V}\right) + \sin(\phi)\left(\beta - \frac{r \cdot r_{AoS}}{V}\right)\right]$$

where Φ is the bank angle, $\dot{H}$ is the vertical velocity of the aircraft, V is the airspeed of the aircraft with respect to the surrounding air, Θ is the longitudinal altitude angle of the aircraft, $\alpha$ is the incidence angle of the wings of the aircraft, q is the pitch rate of the aircraft, $r_{AoA}$ is the distance between the incidence angle sensor and the center of gravity of the aircraft, r is the yaw rate and $r_{Aos}$ is the distance between the sideslip angle sensor and the center of gravity, and wherein $f\left(\frac{\dot{H}}{V}\right)$ is a function of the ratio of the vertical velocity $\dot{H}$ to the airspeed V.

2.   The control device as claimed in claim 1, **characterized in that** the control device is designed to determine the additional incident angle drive signal using the function

$$f\left(\frac{\dot{H}}{V}\right) = \frac{\dot{H}}{V} \text{ or } \arcsin\left(\frac{\dot{H}}{V}\right).$$

3.   Method for reducing the turbulence and gust influences on the flying characteristics of aircraft, **characterized by** determination of an additional incidence angle ($\alpha_{wf}$) as the component ($\alpha_{wf}$) of the wind incidence angle caused by any vertical air mass movement, on the plane of symmetry of the aircraft, using the formula:

$$\alpha_{wf} = \cos(\phi)\left[f\left(\frac{\dot{H}}{V}\right) - \Theta + \cos(\phi)\left(\alpha + \frac{q \cdot r_{AoA}}{V}\right) + \sin(\phi)\left(\beta - \frac{r \cdot r_{AoS}}{V}\right)\right]$$

where is the bank angle, $\dot{H}$ is the vertical velocity of the aircraft, V is the airspeed of the aircraft with respect to the

surrounding air, $\Theta$ is the longitudinal altitude angle of the aircraft, $\alpha$ is the incidence angle of the wings of the aircraft, q is the pitch rate of the aircraft, $r_{AoA}$ is the distance between the incidence angle sensor and the center of gravity of the aircraft, r is the yaw rate and $r_{AoS}$ is the distance between the sideslip angle sensor and the center of gravity,

and $f\left(\dfrac{\dot{H}}{V}\right)$ is a function of the ratio of the vertical velocity $\dot{H}$ to the airspeed V, in order to calculate a control signal for control surfaces on aircraft surfaces which generate an air force, as a function of an instantaneous bank angle ($\Phi$) and sideslip angle ($\beta$) and in order to control the control surfaces as a function of the additional incidence angle ($\alpha_{wf}$).

**4.** The method as claimed in claim 3, wherein the function is

$$f\left(\frac{\dot{H}}{V}\right)=\frac{\dot{H}}{V}\,or\,\arcsin\left(\frac{\dot{H}}{V}\right).$$

**Revendications**

**1.** Dispositif de pilotage pour aéronefs pour réduire les effets des turbulences et des rafales sur le comportement d'un aéronef, dans lequel le dispositif de pilotage est relié à un capteur d'angle de dérive pour déterminer l'angle de dérive ($\beta$) actuel, à un capteur d'angle de roulis pour déterminer l'angle de roulis ($\Phi$) actuel, **caractérisé en ce que** le dispositif de pilotage est agencé pour générer un signal de commande d'un angle d'incidence additionnel pour des surfaces réglables appartenant à des surfaces produisant des forces aérodynamiques de l'aéronef à piloter, en particulier des ailes portantes et/ou un empennage, en fonction d'un angle de dérive ($\beta$) et d'un angle de roulis ($\Phi$) actuels de l'aéronef à piloter, et pour ajouter le signal de commande d'un angle d'incidence additionnel à des signaux de réglage pour piloter les surfaces réglables de l'aéronef à piloter, le dispositif de pilotage définissant par la formule suivante le signal de commande d'un angle d'incidence additionnel en fonction d'une composante ($\alpha_{Wf}$) de l'angle d'incidence du vent dans le plan de symétrie de l'aéronef, angle suscité par un mouvement de masses d'air vertical :

$$\alpha_{Wf}=\cos(\phi)\left[f\left(\frac{\dot{H}}{V}\right)-\theta+\cos(\phi)\left(\alpha+\frac{q\cdot r_{AoA}}{V}\right)+\sin(\phi)\left(\beta-\frac{r\cdot r_{AoS}}{V}\right)\right]$$

où $\Phi$ est l'angle de roulis, $\dot{H}$ est la vitesse verticale de l'aéronef, V est la vitesse de vol de l'aéronef par rapport à l'air environnant, $\theta$ est l'angle de position longitudinale de l'aéronef, $\alpha$ est l'angle d'incidence des surfaces portantes de l'aéronef, q est la vitesse de tangage de l'aéronef, $r_{AoA}$ est la distance du capteur d'angle d'incidence au barycentre de l'aéronef, r est la vitesse de lacet et $r_{Aos}$ est la distance du capteur d'angle de dérive au barycentre, et où $f\left(\dfrac{\dot{H}}{V}\right)$ est une fonction du rapport entre la vitesse verticale $\dot{H}$ et la vitesse de vol V.

**2.** Dispositif de pilotage selon la revendication 1, **caractérisé en ce que** le dispositif de pilotage est formé pour déterminer le signal de commande d'un angle d'incidence additionnel avec la fonction $f\left(\dfrac{\dot{H}}{V}\right)$ égale à $\dfrac{\dot{H}}{V}$ ou arcsin $\left(\dfrac{\dot{H}}{V}\right).$

**3.** Procédé pour réduire les effets des turbulences et des rafales sur le comportement de vol d'un aéronef, **caractérisé par** la recherche selon la formule suivante d'un angle d'incidence additionnel ($\alpha_{wf}$) en tant que composante $\alpha_{wf}$ de l'angle d'incidence du vent dans le plan de symétrie de l'aéronef , angle suscité par un mouvement de masses d'air vertical :

$$\alpha_{Wf} = \cos(\phi)\left[ f\!\left(\frac{\dot{H}}{V}\right) - \theta + \cos(\phi)\left(\alpha + \frac{q \cdot r_{AoA}}{V}\right) + \sin(\phi)\left(\beta - \frac{r \cdot r_{AoS}}{V}\right) \right]$$

où Φ est l'angle de roulis, $\dot{H}$ est la vitesse verticale de l'aéronef, V est la vitesse de vol de l'aéronef par rapport à l'air environnant, θ est l'angle de position longitudinale de l'aéronef, α est l'angle d'incidence des surfaces portantes de l'aéronef, q est la vitesse de tangage de l'aéronef, $r_{AoA}$ est la distance du capteur d'angle d'Incidence au barycentre de l'aéronef, r est la vitesse de lacet et $r_{Aos}$ est la distance du capteur d'angle de dérive au barycentre, et où $f\!\left(\frac{\dot{H}}{V}\right)$ est une fonction du rapport entre la vitesse verticale $\dot{H}$ et la vitesse de vol V, pour calculer un signal de réglage pour des surfaces réglables appartenant à des surfaces produisant des forces aérodynamiques de l'aéronef à piloter, en fonction d'un angle de dérive (β) et d'un angle de roulis (Φ) actuels et pour piloter les surfaces réglables en fonction de l'angle d'incidence additionnel ($\alpha_{Wf}$).

4.  Procédé selon la revendication 3, **caractérisé en ce que** la fonction $f\!\left(\frac{\dot{H}}{V}\right)$ est égale à $\frac{\dot{H}}{V}$ ou arcsin $\left(\frac{\dot{H}}{V}\right)$.

Fig. 1

Fig. 2

EP 1 854 717 B1

$x_f$ Flugzeuglängsachse

Azimut
(Gierwinkel)

Längsneigung
(Nickwinkel)

$x_g$

q

$k_1$

$y_g$

O

$k_2$

$x_g, y_g$

Hängewinkel
(Rollwinkel)

f

$y_f$
Flugzeugquerachse

Flugzeughochachse

$z_f$

$k_3$

$z_g$

**Fig. 3**

Längsachse
$x_f$

$x_a, y$

$x_e$

V

α

β

$x_a$

Flugwindachse

α = Anstellwinkel
β = Schiebewinkel

Querachse

β

$y_f = y_e$

$y_a$

$z_f$

α

Querkraftachse

$z_a = z_e$

Auftriebsachse

**Fig. 4**

Anströmbedingungen und resultierende Luftkraft
in der ruhenden Atmosphäre

Anströmbedingungen und resultierende Luftkraft
infolge einer Aufwindböe

**Fig. 5**

# EP 1 854 717 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 5797105 A

### In der Beschreibung aufgeführte Nicht-Patentliteratur

- Design, Development and Implementation of an Active Control System for Load Alleviation for a Commercial Airplane. **O'CONNEL, R.F.** AGARD Report No. 683. 1979
- **ROLLWAGEN, G. ; ELLGOTH, H. ; BEUCK, G.** Identification of Dynamic Response, Simulation and Design of a Highly Nonlinear Digital Load Alleviation System for a Modern Transport Aircraft. *17tH ICAS Congress,* 1990
- OLGA - An Open Loop Gust Alleviation System. **BÖHRET, H. ; KRAG, B. ; SKUDRIDAKIS, J.** AGARD CP Nr. 384. 1985
- LARS - Auslegung eines fortschrittlichen Böenabminderungssystems mit ATTAS. **HAHN, K.-U. ; KÖNIG, R.** Deutscher Luft- und Raumfahrtkongress. 1991
- ATTAS Flight Test and Simulation Results of the Advanced Gust Management System LARS. **HAHN, K.-U. ; KÖNIG, R.** AIAA Atmospheric Flight Mechanics Conference. Hilton Head Island, S.C, 1992
- **KÖNIG, R. ; HAHN, K.-U.** *Load Alleviation and Ride Smoothing Investigations using ATTAS,* 1990